Europäisches Patentamt

European Patent Office

Office européen des brevets

(11) Publication number: **0 267 942 B1**

## EUROPEAN PATENT SPECIFICATION

(45) Date of publication of patent specification: **12.08.92**

(51) Int. Cl.⁵: **H01S 3/16**, H01S 3/121

(21) Application number: **87903522.8**

(22) Date of filing: **01.05.87**

(86) International application number:
**PCT/US87/00955**

(87) International publication number:
**WO 87/07447 (03.12.87 87/27)**

(54) **UPCONVERSION PUMPED LASERS.**

(30) Priority: **30.05.86 US 869270**

(43) Date of publication of application:
**25.05.88 Bulletin 88/21**

(45) Publication of the grant of the patent:
**12.08.92 Bulletin 92/33**

(84) Designated Contracting States:
**DE FR GB SE**

(56) References cited:
**US-A- 3 582 820**
**US-A- 3 599 109**

**Soviet Physics Technical Physics, volume 27, no.3, March 1982, American Institute of Physics, (New York, US), B.M. Antipenko et al.: "New excitation schemes for laser transitions", pages 333-334, see page 333, column 1, lines 1-16; page 334, column 2, lines 23-26**

(73) Proprietor: **Hughes Aircraft Company**
**7200 Hughes Terrace P.O. Box 45066**
**Los Angeles, California 90045-0066(US)**

(72) Inventor: **POLLACK, Slava, A.**
**628 Via Del Monte**
**Palos Verdes Estates, CA 90274(US)**
Inventor: **CHANG, David, B.**
**14212 Livingston**
**Tustin, CA 92680(US)**

(74) Representative: **KUHNEN, WACKER & PARTNER**
**Alois-Steinecker-Strasse 22 Postfach 1553**
**W-8050 Freising(DE)**

Soviet Journal of Quantum Electronics, volume 13, no. 2, February 1983, American Institute of Physics, (New York, US), Kh.S. Bagdasorov et al: "Steadystate emission from a Y3Al5Q12: Er37 laser", pages 262-263, see abstract; page 262, column 7, lines 1-12; figure 1

Qptics Letters, volume 9, no. 4, April 1984, Qptical Society of America, (New York, US), R.W. Tkach et al.: "Solid state vibrational laser -KBr: CN-", pages 122-124

Applied Physics Letters, volume 19, no. 2, 15 July 1971, American Institute of Physics, (New York, US), L.F. Johnson et al.: "Infrared-pumped visible laser", pages 44-47 see abstract; figure 1

Soviet Journal of Quantum Electronics , volume 4, no. 12, June 1975,American Institute of Physics, (New York, US), S.Kh Batygov et al.: "Erbium-doped CaF2 crystal laser operating et room temperature", pages 1469-1470 see figure 1

Applied Qptics, volume 17, no.4, 15 February 1978, American Institute of Physics (New York, US), M.J. Landry: "Exploding PbS film Q-switch laser", pages 635-641 see page 635, column 1, lines 1-9; page 636, column 1, line 29 - column 2, line 10

Journal of Applied Physics, volume 55, no. 9, May 1984, American Institute of Physics, (New York, US), H. Gringras et al.: "External laser triggering of a saturable absorption Q-switching system", pages 3241-3242 see column 1, lines 11-13

## Description

U.S Application, Serial Number  869,270 , entitled "Method of Providing Continuous Lasing Operation" filed concurrently with the subject application by the same inventors.

Background of the Invention

This invention relates generally to the laser art and more particular to lasers which utilize upconversion-type materials as the lasing medium.

It is well known that some rare earth ions, when incorporated as impurities in sufficient concentration into a suitable host lattice, can upconvert infrared radiation to various shorter wavelengths. Upconversion, i.e., the conversion of long-wave into short-wave radiation by certain solids, without assistance of auxiliary radiation, can be accomplished by several multiphoton mechanisms. However, only one, the cooperative excitation mechanism, is thought to be efficient enough to be practical. The latter mechanism proceeds according to a scheme in which the ground-state electrons of several atoms (ions) absorb one infrared photon each. The energy subsequently migrates through a nonradiative process to a single atom exciting it to a higher energy level with ensuing fluorescence.

It has been proposed some time ago to utilize this mechanism for optical laser pumping; "Infrared-Pumped Visible Laser", L.F. Johnson, H.J. Guggenheim, Appl. Phys. Lett., Vol. 19, No. 2, pg. 44, 1971. Using conventional optical pumping, the population inversion of a lasing state is achieved through absorption of radiation by the laser active medium into energy states lying at or above the meta-stable lasing state. Subsequently, the energy is transferred to a lasing state (if previously above) via radiative and/or nonradiative transitions. In contrast, the upconversion optical pumping scheme is based on upconversion of radiation absorbed into an energy level lying below the initial lasing state.

The Soviet Journal of Quantum Electronics, Vol. 13, No. 2, February 1983, page 262-263 reports on experimental and theoretical studies demonstrating that steady state emission is possible in an YAG:Er$^{3+}$ laser utilizing the self terminating $^4I_{11/2}$ - $^4I_{13/2}$ transition. The four-level scheme was pumped by an conventional xenon flashlamp populating the upper laser level $^4I_{11/2}$ due to various cascading processes. Although the lifetime of the upper laser level $^4I_{11/2}$ was shorter than the lifetime of the lower laser level $^4I_{13/2}$,laser oscillations have been observed. This is due to the fact that the lower laser level $^4I_{13/2}$ was located in a four-level scheme in such a fashion that a resonant energy transfer was possible as a result of the interaction between active centers (cross- relaxation). As a result of this interaction one active center of the lower laser level loses energy by dropping to the ground state, whereas another center acquires energy and goes over to the upper laser level or to a state above the upper laser level. Such a four-level system provides an additional depopulation mechanism to depopulate the lower laser level.

The Soviet Physics Technical Physics, Vol. 27, No. 3, March 1982, page 333-334 reports on new cooperative excitation schemes for efficient solid- state lasers. Accordingly, a $BaYb_2F_8:Er^{3+}$ laser (with $Yb^{3+}$ as sensitizer) was described being excited by cooperative stepwise sensitation. The pump source was a Nd:glass laser pumping the $^2F_{7/2}$-$^2F_{5/2}$ band of the $Yb^{3+}$ sensitizer. The excitation transfer from the $^2F_{5/2}$ level to the respective levels of the lasing ions was composed by a plurality of elementary processes, one of which was the afore-described cross relaxation process between individual lasing centers depopulating the lower laser level $^4I_{13/2}$ by transferring energy to the $^4S_{3/2}$ level of Er. Thus, an efficient pumping mechanism is provided.

Pumping of a solid state infrared laser with upconverted vibration energy has also been reported; "Solid-State Vibrational Laser - KBr:CN$^-$", R.W. Tkatch, T.R. Gosnell, A.J. Sievers, Optics Letters, Vol. 10, No., 4, pg. 122, 1984.

The object of the present invention is solved by a laser apparatus in accordance with claim 1.

In more detail, a laser arrangement in accordance with one embodiment of the subject invention incorporates a laser medium disposed within a laser cavity and pumping means for selectively applying excitation energy to said laser medium. The laser medium contains upconverting material of the type which allows for the exchange of energy between electrons of the lasing ions at a given energy state below the meta-stable initial lasing state so that some of said exchanging electrons are upconverted to energy states at or above the meta-stable initial lasing state. The pumping means applies energy of suitable wavelength and intensity for elevating electrons from energy levels below the given state to that state in sufficient numbers to support substantial upconversion and the resulting lasing. In a particular embodiment the laser medium comprises a rod of calcium fluoride crystal hosting erbium ions, the laser cavity is tuned to 2.8$\mu$m, the pumping means applies 1.54$\mu$m photon energy and lasing is between the $^4I_{11/2}$ and $^4I_{13/2}$ energy states. In accordance with one aspect of the invention in which the given energy state is the terminal state of the lasing transition for the laser medium and in which the concentration of upconverting material is such that exchange of energy between electrons of said terminal energy state is sufficient to maintain population inversion between the initial and terminal lasing states, the continuous lasing operation can be sustained in response to continuous excitation by the pumping means.

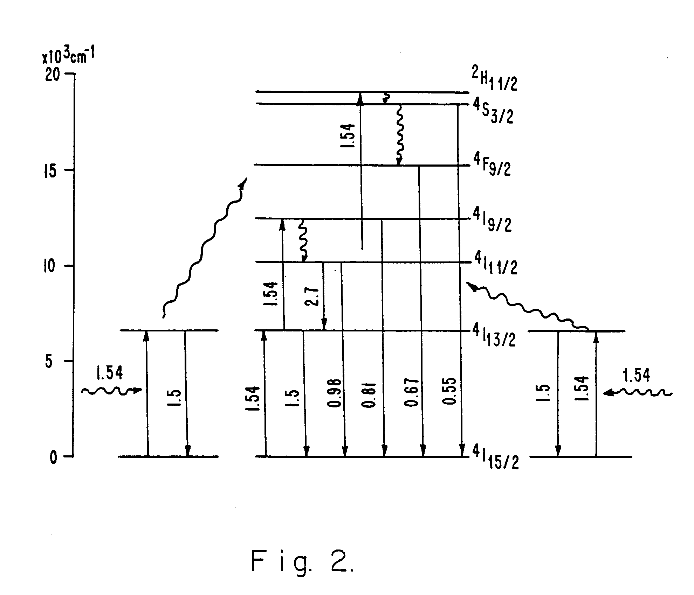

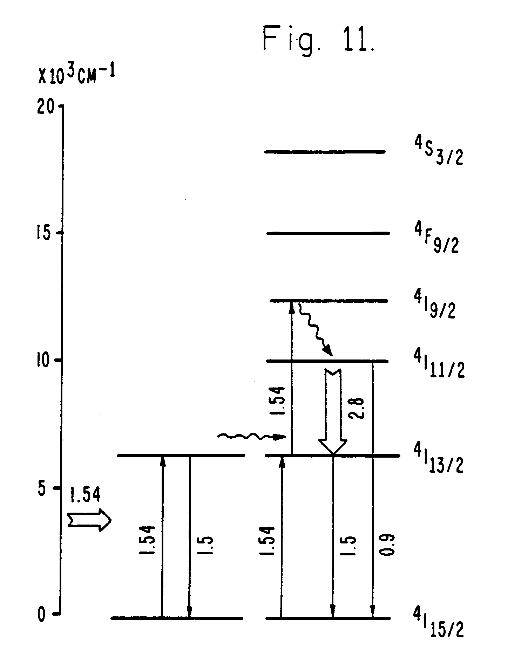

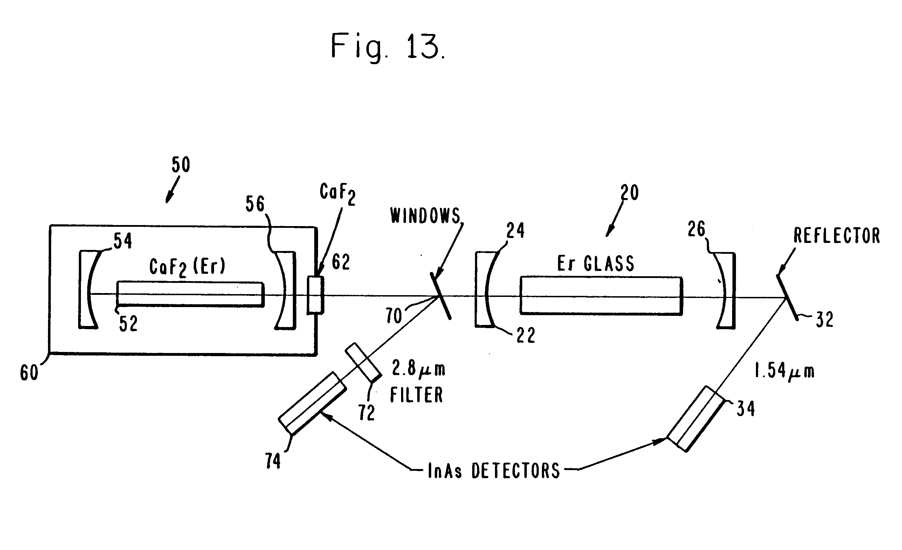

The energy level scheme relating to the above referenced $^4I_{11/2} \rightarrow {}^4I_{13/2}$ transition is illustrated in FIGS. 2 and 11. The two photon, two ion upconversion process proceeds as follows: two $Er^{3+}$ ions absorb $1.54\mu m$ photons exciting them to the $^4I_{13/2}$ state. This state has a long lifetime, approximately 20 msec and, thus, probability for direct electron relaxation from $^4I_{13/2}$ to the ground state is small. Therefore, the ions exchange energy via a dipole-dipole interaction. As a result of this interaction, one ion is excited to the third excited state, $^4I_{9/2}$, and the second ion relaxes to the ground state. Through a nonradiative transition, electrons cascade from $^4I_{9/2}$ to the second $^4I_{11/2}$ state inverting its population with respect to the first $^4I_{13/2}$ state. When excitation radiation intensity is sufficiently high, the population inversion at the $^4I_{11/2}$ state reaches a sufficient level for overcoming the cavity losses, and laser emission occurs between the $^4I_{11/2}$ and $^4I_{13/2}$ states with the resultant emission of $2.8\mu m$ radiation. It is noted that in the just discussed lasing scheme the pumping energy was a shorter wavelength ($1.54\mu m$) than the lasing energy ($2.8\mu m$) produced, as a result of the lasing energy band selected, e.g., cavity mirror spacing (see FIG. 13). However, it is submitted that nevertheless the laser is upconversion pumped in the sense that the transition to the upper laser state ($^4I_{11/2}$ via $^4I_{9/2}$) was by upconversion from the $^4I_{13/2}$ state.

In accordance with a further disclosed embodiment, a thin graphite foil is disposed in the lasing path of a laser cavity and the laser is Q-switched by vaporizing a portion of the foil by means of laser energy applied from another source.

A primary advantage of the subject invention is to provide new and improved lasers.

Another advantage of the subject invention is to provide an upconversion pumped laser.

Another advantage is to provide a solid state laser arrangement which achieves optical pumping through upconversion.

Yet another advantage is to provide a solid state laser which lases at room temperatures and with relatively low energy input.

## BRIEF DESCRIPTION OF THE DRAWINGS

The novel features that are considered characteristic of this invention are set forth with particularity in the appended claims. The invention itself, both as to the organization and method of operation as well as additional objects and advantages thereof, will best be understood from the following description when read in connection with the accompanying drawings in which like reference numerals refer to like parts and in which:

FIGURE 1 depicts the absorption and emission bands of $CaF_2$ (10% $Er^{3+}$). Emission is excited by upconverted $1.5\mu m$ radiation. Relative intensities of emission bands are not drawn to scale.

FIGURE 2 depicts the energy level diagram of $Er^{3+}$ ion and upconversion excitation scheme.

FIGURE 3 depicts the relative intensities of major upconverted bands versus relative intensities of $1.6\mu m$ and $0.9\mu m$ excitation radiation.

FIGURE 4 depicts the dependence of relative intensities of upconverted bands on concentration of $Er^{3+}$ ions in $CaF_2$.

FIGURE 5 depicts the upconversion efficiency for visible bands versus intensity of $1.5\mu m$ excitation radiation.

FIGURE 6 depicts the lifetimes of $^4I_{11/2}$ and $^4I_{13/2}$ at room temperature versus concentration of $Er^{3+}$ ions in $CaF_2$.

FIGURE 7 depicts the spectral output of $^4I_{11/2} \rightarrow {}^4I_{13/2}$ laser transition in $CaF_2$ ($Er^{3+}$) in a vacuum at room temperture.

FIGURE 8 depicts the spectral output of $^4I_{11/2} \rightarrow {}^4I_{13/2}$ laser transition in $CaF_2$ ($Er^{3+}$) in 100 mm Hg of $CO_2$ at room temperature.

FIGURE 9 depicts the time resolved $CaF_2$ ($Er^{3+}$) laser emission at $2.75\mu m$ (lower trace) and $2.80\mu m$ (upper trace).

FIGURE 10 depicts threshold pumping energy (bottom curve 152) and intensity of upconverted radiation (top curve 150) as functions of $Er^{3+}$ ion concentration in $CaF_2$.

FIGURE 11 depicts the energy levels involved in upconversion and laser pumping scheme for $^4I_{11/2} \rightarrow {}^4I_{13/2}$ transition in $CaF_2$ ($Er^{3+}$).

FIGURE 12 depicts the laser emission at $2.8\mu m$ in $CaF_2$ ($Er^{3+}$) excited by 1 msec xenon flash lamp pulse at room temperature.

FIGURE 13 is a schematic diagram of an upconversion pumped laser arrangement in accordance with the invention.

FIGURE 14 depicts the emission of a $CaF_2$ (5% $Er^{3+}$) laser around 2.8$\mu$m (upper trace) excited by 1.54$\mu$m radiation of erbium glass laser (lower trace) at room temperature.

FIGURE 15 is a schematic diagram of an arrangement for Q-switching of a $CaF_2$ ($Er^{3+}$) laser.

## DESCRIPTION OF THE PREFERRED EMBODIMENTS

Erbium contained as an impurity in many host lattices can upconvert 1.5$\mu$m and 980nm radiation with or without assistance of a sensitizer. Some pure erbium compounds, e.g., $ErF_3$, also exhibit this property. The radiation is absorbed or transferred to the $^4I_{13/2}$ and/or $^4I_{11/2}$ states of the $Er^{3+}$ ion and is converted to several visible and infrared bands. Alkaline-earth-fluoride crystals doped with a few mole percent of erbium are characterized by a very efficient upconversion.

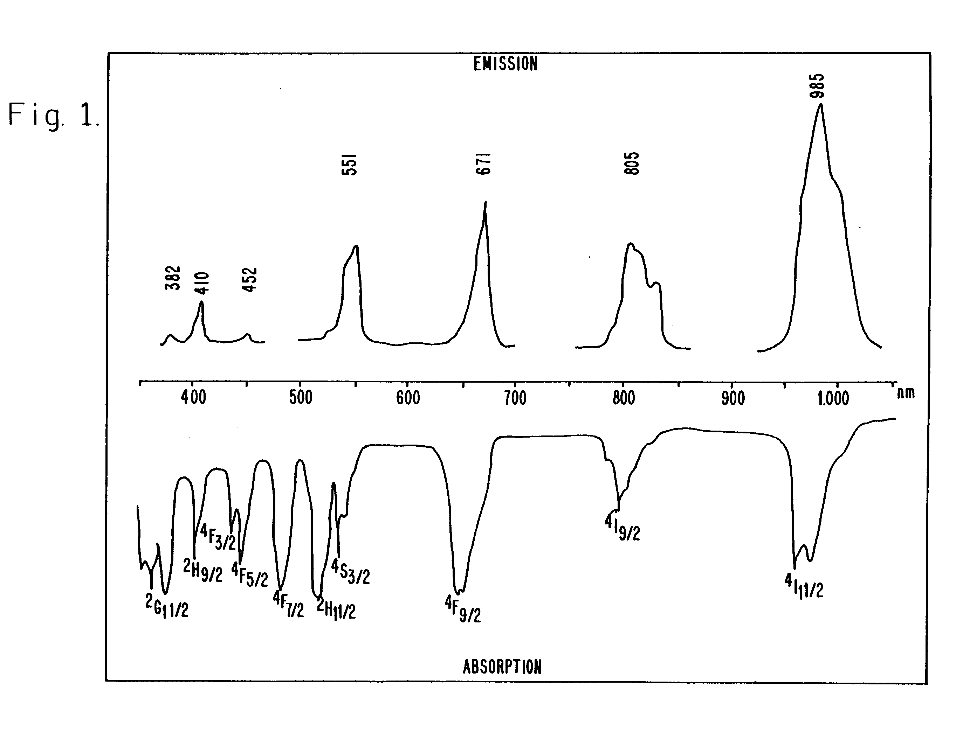

Absorption of 1.5$\mu$m radiation in $CaF_2$ (10% $Er^{3+}$) results in emission of seven bands in the red to violet region of the spectrum ranging in wavelengths from 985 to 382nm, as shown in FIG. 1 with the emission and absorption bands juxtaposed. FIG. 2 shows the energy level diagram of the $Er^{3+}$ ion and an excitation scheme for the principal upconverted bands. In addition to the bands shown in FIG. 1, three bands in the infrared, around 2.7, 2.0, and 1.15$\mu$m, have also been observed. These bands arise from the transitions between the $Er^{3+}$ excited states, viz. $^4I_{11/2} \rightarrow {}^4I_{13/2}$, $^4F_{9/2} \rightarrow {}^4I_{11/2}$ and $^4F_{9/2} \rightarrow {}^4I_{13/2}$, respectively.

The relative band intensities, excluding the weak 2.0 and 1.15$\mu$m bands, corrected for the detector and monochromator sensitivities and normalized to the intensity of the resonant 1.65$\mu$m band, are given in Table I. It can be seen that the strongest upconverted emission occurs from the $^4I_{11/2}$ state.

TABLE I

| $\lambda$, nm | Initial State | Relative Intensity |
|---|---|---|
| 2,700 | $^4I_{11/2}$ | 0.22 |
| 1,615 | $^4I_{13/2}$ | 1 |
| 985 | $^4I_{11/2}$ | 0.58 |
| 828 | $^4I_{9/2}$ | $2.8 \times 10^{-2}$ |
| 670 | $^4F_{9/2}$ | 0.17 |
| 550 | $^4S_{3/2}$ | $9.3 \times 10^{-2}$ |
| 452 | $^4F_{5/2}$ | $1.8 \times 10^{-4}$ |
| 410 | $^2H_{9/2}$ | $1.7 \times 10^{-3}$ |
| 382 | $^2G_{11/2}$ | $1.2 \times 10^{-5}$ |

Without a $Yb^{3+}$ sensitizer, upconversion of 980nm in $CaF_2$ ($Er^{3+}$) is weak. Only two emission bands at 671 and 551nm are detectable; however, their intensities are two orders of magnitude weaker than the intensities of their counterparts excited by upconversion of 1.5$\mu$m radiation.

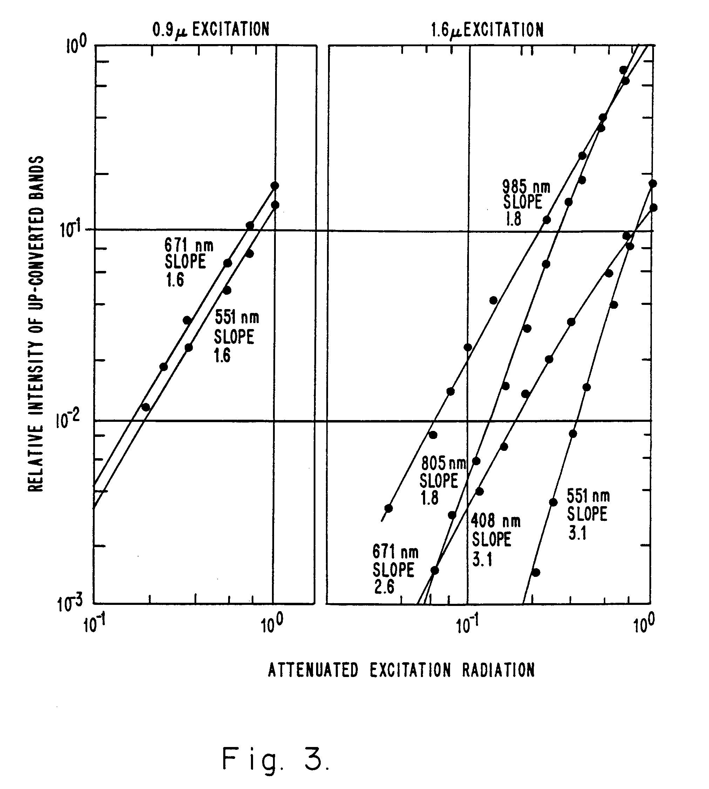

The excitation schemes shown in FIG. 2 are derived from the results of relative intensity measurements of upconverted bands versus attenuated excitation radiation, shown in FIG. 3. It follows from the slopes of the plotted curves that the intensities of the 671 and 551 nm bands have a cubic dependence, and the intensities of the 985 and 805nm bands, a quadratic dependence on the intensity of 1.5$\mu$m excitation radiation. In other words, the first and the last two bands are the results of three and two photon upconversion processes, respectively.

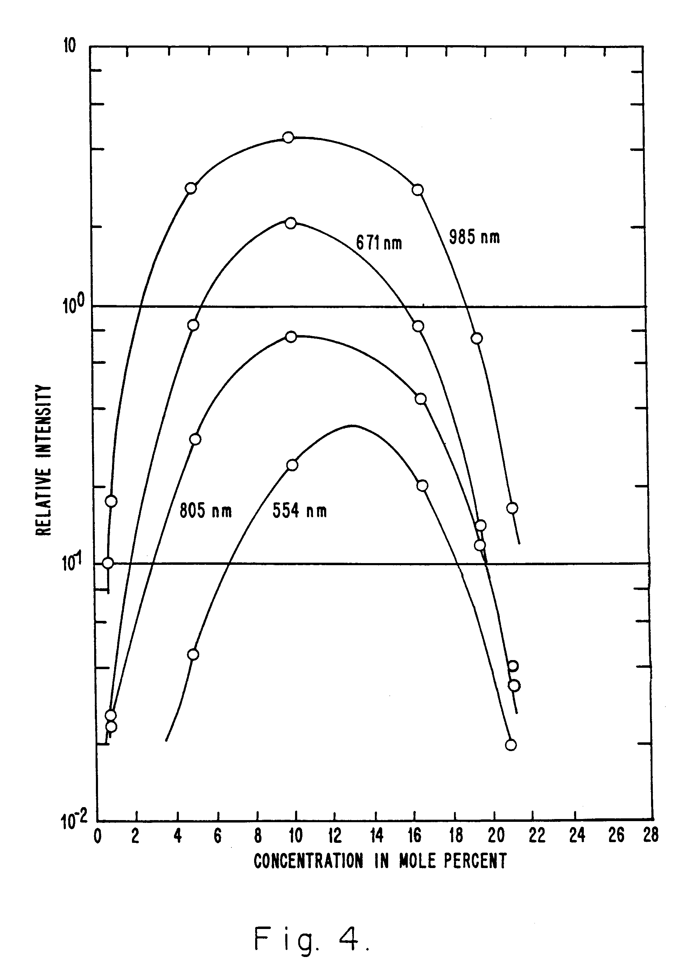

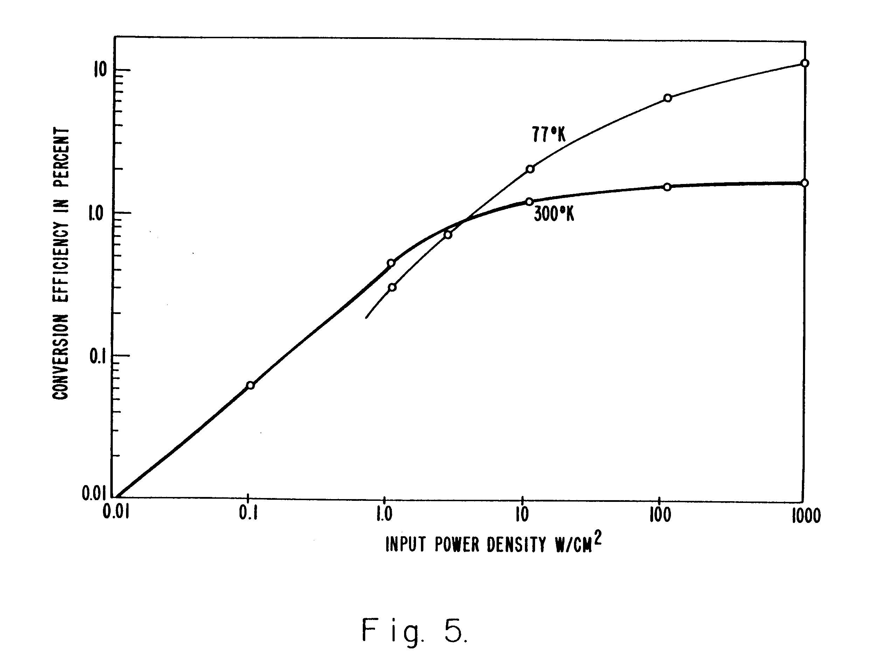

FIG. 4 shows the dependence of the relative intensity of upconverted bands on the concentration of $Er^{3+}$ ions in $CaF_2$, and FIG. 5 shows the conversion efficiency of the visible bands as a function of input power density. It follows from FIG. 4 that the strongest upconversion occurs when the concentration of $Er^{3+}$ ion is around 10 mole percent.

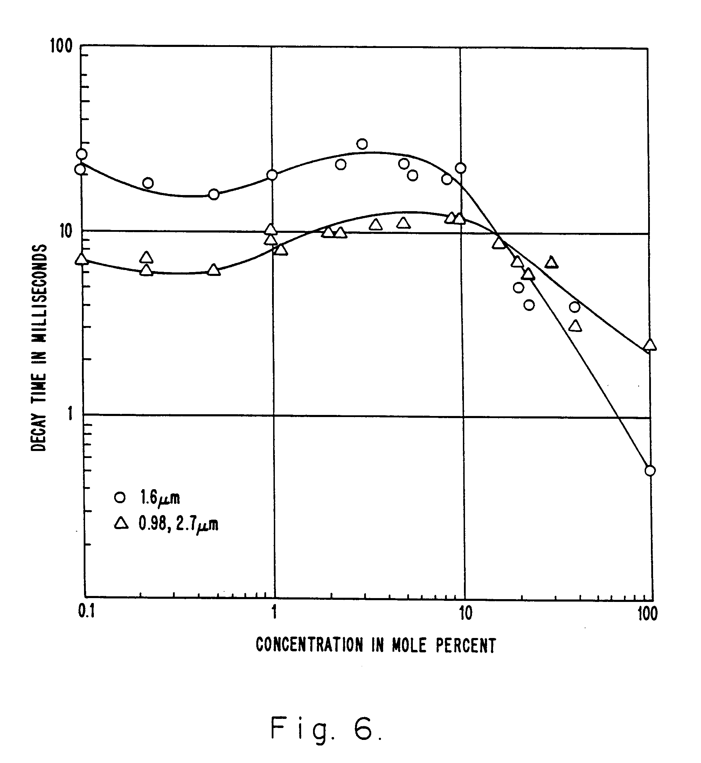

In order to select the proper concentration of $Er^{3+}$ ion in $CaF_2$, various important parameters associated with this transition were measured as a function of concentration. FIG. 6 shows the measured lifetimes of the initial $^4I_{11/2}$ and $^4I_{13/2}$ states as the function of concentration at room temperature.

The measurements were performed by exciting the samples with the filtered short-wave radiation of short duration (20$\mu$sec) xenon flash lamp pulses. It should be noted at this juncture that, generally, the decay curves of fluorescence bands produced by conventional flash lamp excitation technique are different from the decay curves of the same emission bands excited by upconverted IR short duration pulses. In the former case, the decay curve time constants represent the lifetimes of the excited states from which fluorescence originates; in the latter case, the time constants are related to the lifetime of an intermediate state, such as $^4I_{13/2}$.

It can be seen from FIG. 6 that the lifetime of the upper state $\tau_2$ is shorter than the lifetime of the lower state $\tau_1$ up to $Er^{3+}$ ion concentrations of around 20 mole percent. Laser transitions between states for which the inequality $\tau_2 < \tau_1$ holds were heretofore generally thought to be self-saturating.

A main difficulty encountered in exciting the self-saturating lasers lies in producing sufficient population inversion between the operating levels. The use of 20 mole percent concentration of $Er^{3+}$ in $CaF_2$ was prevented because the excessive concentration affects the laser rod's optical quality and thus its ability to lase.

The $^4I_{11/2} \rightarrow {}^4I_{13/2}$ transition laser emission was reported some time ago in $CaF_2$ doped with $Er^3$ and $Tm^{3+}$ ions; "Thermal Switching of Laser Emission of $Er^{3+}$ at $2.69\mu$ and $Tm^{3+}$ at $1.86\mu$ in Mixed Crystals of $CaF_2:ErF_3:TmF_3$"; M. Robinsson, D.P. Devor; Applied Physics Letters, Vol. 10, No. 5, pg. 167, 1967. The addition of $Tm^{3+}$ ions was intended to shorten the lifetime of the $^4I_{13/2}$ state through nonradiative energy transfer from $Er^{3+}$ to $Tm^{3+}$ ions. Such a transfer has previously been reported by Johnson, et al; "Energy Transfer From $Er^{3+}$ to $Tm^{3+}$ and $Ho^{3+}$ Ions in Crystals", Phys. Rev., Vol. 133, Number 2A, pg. A494, 1964. Lasing was produced at room temperture with the reported threshold of only 10 Joules.

Since then, this laser emission of $Er^{3+}$ between the $^4I_{11/2}$ and $^4I_{13/2}$ states, occurring around $3\mu m$, has been produced in more than a dozen different host materials; A.A. Kaminskii, Laser Crystals, Springer Series in Optical Sciences, Editor D.L. MacAdam, Vol. 14, Springer-Verlag, Berlin, Heidelberg, New York, 1981. In many hosts, including $CaF_2$, the $Er^{3+}$ ion lases without deactivating ion assistance.

Most $3\mu m$ erbium lasers have the following properties in common: (1) they operate at room temperature, (2) they require high erbium ion concentration for low pump energy, and (3) they are characterized by a terminal state/initial state lifetime ratio greater than one; in some host materials this ratio exceeds ten. Surprisingly, these laser operate quite well in a pulsed mode at room temperature with low pump energy.

To explain pulsed lasing, a hypothesis was put forward taking into account Stark splitting of the $I_{11/2}$ and $^4I_{13/2}$ excited states; A.A. Kaminskii, Laser Crystals, Springer Series in Optical Sciences, Editor D.L. MacAdam, Vol. 14, Springer-Verlag, Berlin, Heidelberg, New York, 1981. They are split into six and seven Kramers' doublet components, respectively, in crystalline fields of low symmetry. According to this hypothesis, the $^4I_{11/2} \rightarrow {}^4I_{13/2}$ lasing process proceeds as follows. The short optical pumping pulse of an xenon flash lamp preferentially populates (with or without the aid of a sensitizer) the upper $^4I_{11/2}$ state, leaving the levels of the terminal $^4I_{13/2}$ state manifold empty or sparsely populated. The population inversion produced at the levels of the $^4I_{11/2}$ manifold results in self-saturated laser transitions to various levels of the terminal state manifold. The shorter wavelength laser lines rapidly disappear from the spectrum because the lower lying levels of the terminal manifold saturate faster. Only the longest wavelength lines, arising from transitions which terminate on the upper levels of the terminal manifold, persist longer and can be observed in the late laser spectrum. This is the so-called "red shift" of the spectral lines of self-saturating lasers.

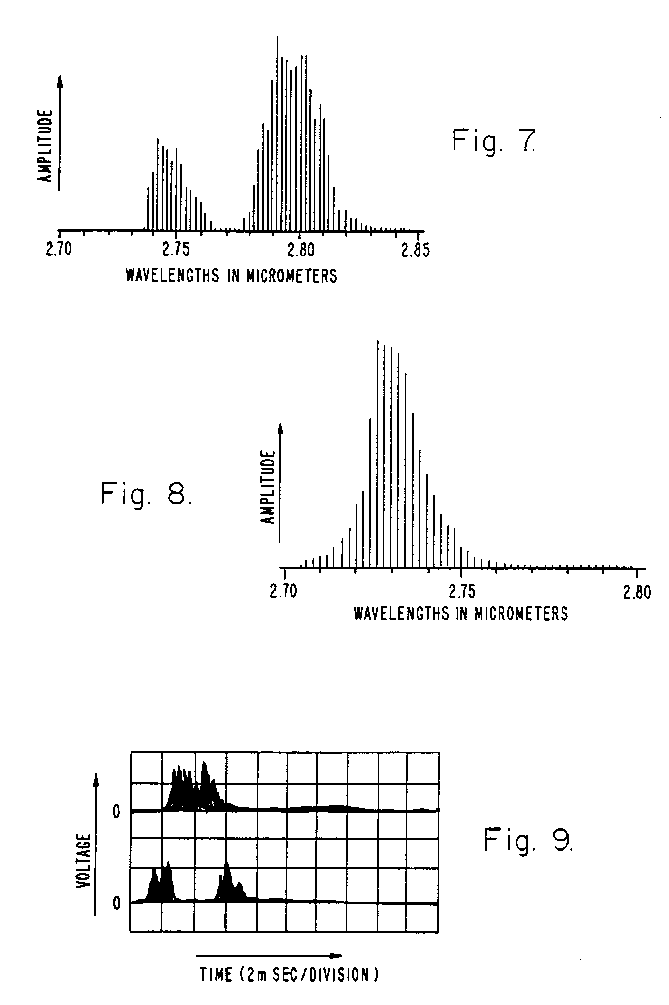

The $^4I_{11/2} \rightarrow {}^4I_{13/2}$ laser transition of $Er^{3+}$ in $CaF_2$ occurring in $2.7-2.8\mu m$ spectral region coincides with the strong absorption regions of $CO_2$ and $H_2O$ molecules; therefore, presence of these molecules in the laser cavity affects the position and number of the observed bands in the laser spectrum. To illustrate this effect, FIG. 7 shows the low resolution spectrum produced in vacuum, and FIG. 8 shows the spectrum obtained when the laser cavity was filled with 100mm Hg of $CO_2$. Since a pulsed laser was used, the spectra was recorded point-by-point by advancing the monochromator dial 5nm at a time, which was the monochromator's resolution limit.

At medium-to-high constant laser excitation levels, the output spectrum, i.e., the shape of the recorded bands, remained fairly constant and reproducible from one recording run to the next; whereas, at the low excitation levels, a considerable amount of "line hopping" was observed, within as well as outside the recorded bands, resulting in changed spectral output and band shapes from pulse-to-pulse. This observation indicates the existence of a finer structure in these bands.

It follows from FIG. 7 that in vacuum, emission occurs in two bands centered around 2.75 and $2.80\mu m$. Resolution limitation did not allow the recording of the fine details of these bands; however, they provided the opportunity to verify the existence of the above postulated red shift. For this purpose, the laser beam was split with the aid of a beam splitter in two components. Each component was fed into a monochromator equipped with an InAs detector. One monochromator was set at $2.75\mu m$, while the other one was set at $2.80\mu m$. The predicted red shift was indeed observed in the laser spectrum, as shown in FIG. 9; however, the long wavelength emission did not persist to the end. Through some mechanism, the lower levels of the terminal manifold were again emptied, restoring the short wavelength emission that dominated the late laser spectrum.

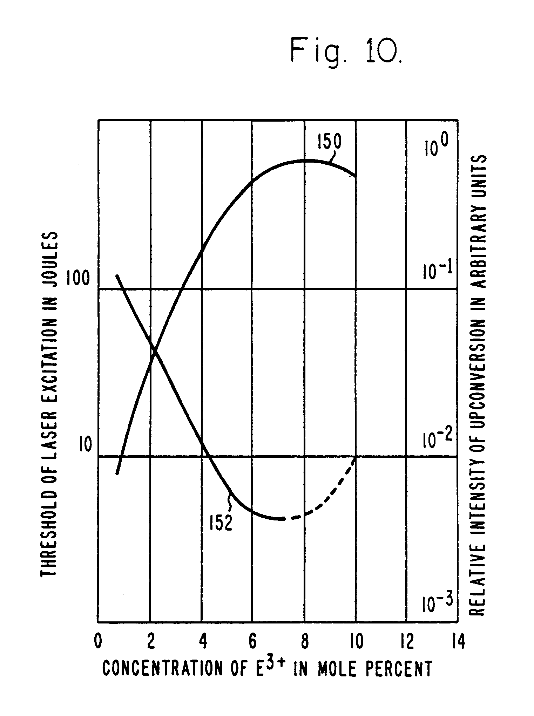

It is hypothesized that this mechanism was energy state upconversion. This hypothesis was bolstered by another observation. When the relative intensity of up-converted radiation in samples of $CaF_2$ ($Er^{3+}$) is plotted versus concentration, and threshold energy of laser made from the same samples versus concentration the two curves which are juxtaposed in FIG. 10 were obtained. It can be seen that both represent a similar but inverted functional dependence on $Er^{3+}$ ion concentration. Because of deteriorating laser rod optical quality with increasing concentration, comparison could not be extended beyond 5-10 mole percent concentration.

In the embodiment of the invention shown in FIG. 13, an erbium glass laser 20 emitting at $1.54\mu m$ is used to pump a $CaF_2$ (5% $Er^{3+}$) laser 50 emitting at $2.8\mu m$.

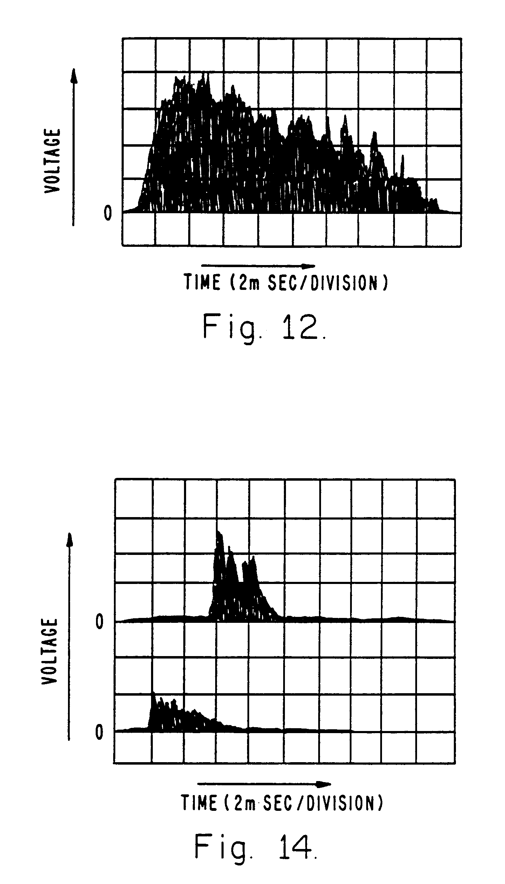

The selected $CaF_2$ (5 mole percent $Er^{3+}$) laser rod 52 was tested in air at room temperature for energy output efficiency and other laser characteristics. A xenon flash lamp was used for excitation, in a cavity with ZnSe concave (1m radius) dielectric mirrors with 90 and 99.5 percent reflectivity (in the test arrangement). The pump energy threshold was about 15 Joules. Output energies in excess of 0.5 Joule per pulse and peak power over 30 watts were achieved at input energies of 150-200 Joules into the flash lamp, with a slope efficiency in excess of 0.3 percent. The spiking laser pulse, 17 msec in duration, is shown in FIG. 12. The energy and power output values given above were not optimized by varying reflectivity of the outcoupling mirror. The unusually long lasing persistence, excited by the xenon flash lamp pulse lasting only 1 msec, suggests a possibility of the excitation energy being recycled through upconversion inside the laser rod. This result is in agreement with a theoretical analysis which sets the upper limit for the upconversion excited lasing persistence equal to the lifetime of the terminal state, i.e., to 20 msec.

Again referring primarily to FIG. 13, pumping laser 20 includes erbium glass rod 22 and end mirror 24 and 26 as well as flash lamps and associated elliptical reflectors (not shown but well known in the art). It is noted that any suitable pumping laser may be utilized.

Laser 50 (FIG. 13) includes $CaF_2$ ($Er^{3+}$) rod 52 and ZnSe concave end mirrors 54 and 56. Rod 52 was grown by Optovac, Inc., and has two ground and polished parallel plane ends without anti-reflection coating. Rod 52 may be incorporated within gold plated elliptical reflectors with xenon flash lamps (not shown) for alignment and optional supplemental power purposes. Mirrors 54 and 56 are 99.5% reflective to $2.8\mu m$ energy. The foregoing elements of laser 50 are enclosed within a vacuum chamber 60 having a $CaF_2$ window 62. Chamber 60 reduces the "Q" spoiling effect of $H_2O$ and $CO_2$ at $2.8\mu m$ Another approach to accomplish the same purpose as chamber 60 would be to apply mirror coatings directly to the ends of laser rod 52.

The power at $1.54\mu m$ from laser 20 is directed by reflector 32 to detector 34 for the purpose of power level monitoring and the power at $2.8\mu m$ is reflected from window 70 through filter 72 to detector 74.

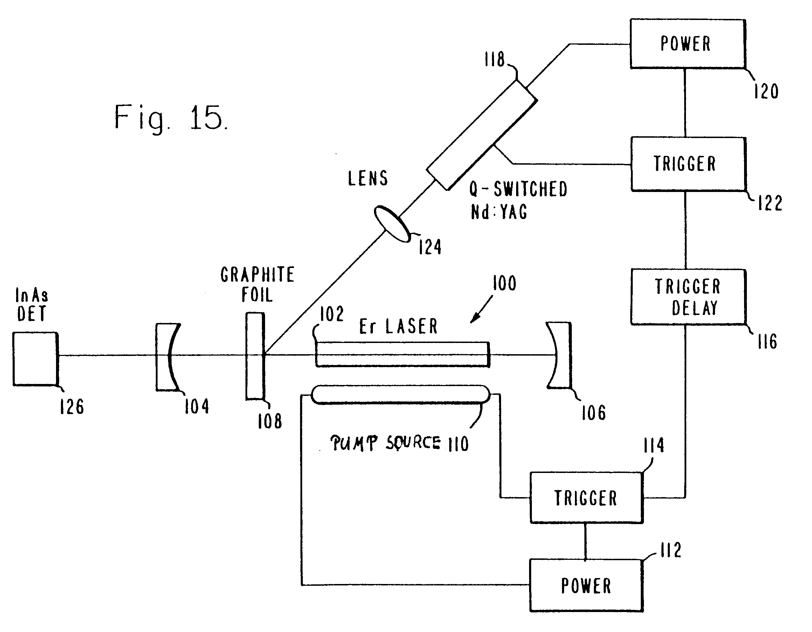

Initially, the mirrors and laser rods were aligned with a HeNe laser and then the lasers were fine tuned individually by pumping with the xenon flash lamps (not shown). At this juncture the flash lamps for laser 50 were disconnected and laser 50 was pumped with the 1.54 $\mu m$ radiation only. FIG. 14 shows oscilloscope traces of $2.8\mu m$ lasing (upper trace) produced by pumping with 1.54 m energy. The $1.54\mu m$ pump pulses and the $2.8\mu m$ upconversion laser pulses as detected by detectors 34 and 74, respectively.

Thus, there has been described an upconversion laser utilized a pumping scheme based on upconversion of radiation absorbed into an energy state laying below the upper lasing state. For example, referring to FIG. 11, the $1.54\mu m$ energy raises the $^4I_{15/2}$ ground state to the $^4I_{13/2}$ lower lasing state, up-conversion raises the energy level to the $^4I_{9/2}$ energy level which energy is subsequently transferred to the upper lasing state $^4I_{11/2}$. Following lasing to the $^4I_{13/2}$ state upconversion can recycle the energy through the just described cycle. Thus, the disclosed arrangement demonstrates that erbium ions alone, without assistance of sensitizing ions, are capable of upconversion IR radiation and pumping the $^4I_{11/2} \rightarrow {}^4I_{13/2}$ laser transition.

FIG. 15 shows an arrangement of the $^4I_{11/2} \rightarrow {}^4I_{13/2}$ laser transition in a $CaF_2$ ($Er^{3+}$) laser which is Q-switched to produce a short, high amplitude pulse. In the laser arrangement 100 of FIG. 15, a $CaF_2$ ($Er^{3+}$) rod 102 is disposed in the laser cavity between mirrors 104 and 106 which are tuned for $2.8\mu m$ lasing. A $100\mu m$ thin graphite foil 108 is disposed in the lasing path.

Laser 100 includes a pumping source 110 which operates with power source 112 and trigger unit 114 in a conventional manner. Conventional elliptical reflectors which encompass rod 102 and pump source 110 are not shown in Fig. 15. Although the arrangement of the pumping source shown in FIG. 15 is not specified in detail it is noted that a selective narrow band pumping source, such as shown in FIG. 13, may be implemented with suitable modifications; such as a window in enclosure 60 (FIG. 13) to allow passage of "switching" energy from laser 118 (FIG. 15).

A trigger signal from unit 114 (FIG. 15) is delayed in unit 116, the output signal therefrom energizes Q-switched Nd:YAG laser 118, which is powered by unit 120. The output radiation from laser 118, for example a 20 nsec pulse, is focused by lens 124 onto foil 108. The focused energy punctures (ruptures and evaporates) a portion of the foil 108 allowing the production of a giant output pulse from laser 100 which is detected by InAs detector 126.

Hence, a new optical pumping scheme is described based on upconversion of radiation absorbed into the energy state lying below the upper laser state with vast potential, for example, of converting powerful infrared into intense visible and/or ultraviolet radiation that can then used for laser pumping.

**Claims**

1.  A laser arrangement (50; 100) comprising:

    a laser cavity (54, 56; 104, 106);

    a laser medium (52; 102) that incorporates lasing ions, disposed within said cavity (54, 56; 104, 106) and containing upconverting material which allows for the exchange of energy between electrons of the lasing ions at a first energy state below a second metastable initial state so that some of the exchanging electrons are upconverted to third energy states at said second state or above said second state;

    pumping means (20; 110) for selectively providing excitation energy to said laser medium (52; 102) characterized in that

    said pumping means (20; 110) selectively provides only excitation energy which a) is of suitable wavelength for elevating electrons from energy levels below said first state to said first state and b) has an intensity suitable for elevating electrons from energy levels below said first state to the first state in sufficient numbers to support substantial upconversion and the resulting lasing; and

    in that said pumping means (20; 110) and resulting upconversion serve as the sole means for pumping the laser medium (52; 102).

2.  The laser arrangement of claim 1 wherein said upconverting material comprises erbium ions.

3.  The laser arrangement of Claim 1 wherein said laser medium (52; 102) comprises a calcium fluoride crystal hosting erbium ions.

4.  The laser arrangement of Claim 3 wherein said calcium fluoride crystal contains 5 mole percent of erbium ions.

5.  The laser arrangement of Claim 3 wherein said pumping means (20; 110) providing energy at 1.54 $\mu$m and lasing occurs between the $^4I_{11/2}$ and $^4I_{13/2}$ energy states.

6.  The laser arrangement of Claim 5 wherein said calcium fluoride crystal contains 5 mole percent of erbium ions.

7.  The laser arrangement of Claim 1 wherein said first energy state is the terminal lasing state of the lasing transition for the laser medium (52; 102) and the concentration of upconverting material is such that exchange of energy between electrons of said first state is sufficient to maintain population inversion between the second and first lasing states, whereby continuous lasing operation can be sustained in response to continuous excitation by said pumping means (20; 110).

8.  The laser arrangement of Claim 1 wherein said laser cavity (54, 56; 104, 106) comprises a lasing path and said laser medium (52; 102) is disposed along said lasing path, characterized by further comprising

    a foil (108) disposed across said lasing path; and

    switch means (114, 116, 122, 120, 118) for selectively applying sufficient energy to said foil (108) so as to evaporate a portion thereof on said lasing path, whereby lasing of said cavity (54, 56; 104, 106) occurs.

9.  The laser arrangement of Claim 8 wherein said foil (108) is a graphite foil.

8

**10.** The laser arrangement of Claim 8 wherein said switch means (114, 116, 122, 120, 118) comprises a Q-switched laser (118).

**Revendications**

**1.** Ensemble laser (50; 100) comprenant:
- une cavité laser (54, 56; 104, 106);
- un milieu laser (52; 102) incorporant des ions à effet laser, placés à l'intérieur de le cavité (54, 56; 104, 106), et qui contient un metériau à conversion incrémentielle permettant l'échange d'énergie entre des électrons des ions à effet laser dans un premier état d'énergie au-dessous d'un second état initial métastable, de sorte que certains des électrons d'échange soient convertis vers le haut jusqu'à des troisièmes états d'énergie à un niveau égal ou supérieur à celui du second état;
- des moyens de pompage (20; 110) pour fournir une énergie d'excitation sélective au milieu laser (52; 102), caractérisé en ce que
- ces moyens de pompage (20, 110) ne fournissent sélectivement qu'une énergie d'excitation qui a) a une longueur d'onde adéquate pour élever les électrons des niveaux d'énergie situés au-dessous du premier état jusqu'à ce premier état, et b) a une intensité adéquate pour élever les électrons des niveaux d'énergie situés au-dessous du premier état jusqu'à ce premier état en nombre suffisant pour soutenir une substantielle conversion vers le haut et l'effet laser qui en résulte; et
- en ce que ces moyens de pompage (20; 110), et la conversion incrémentielle qui en résulte, servent de moyens uniques pour pomper le milieu laser (52; 102).

**2.** L'ensemble laser de la revendication 1 dans lequel le matériau de conversion incrémentielle comprend des ions d'erbium.

**3.** L'ensemble laser de la revendication 1 dans lequel le milieu laser (52; 102) comprend un cristal de fluorure de calcium servant d'hôte aux ions d'erbium.

**4.** L'ensemble laser de la revendication 3 dans lequel le cristal de fluorure de calcium contient 5 pour cent d'ions d'erbium en pourcentage moléculaire.

**5.** L'ensemble laser de la revendication 3 dans lequel les moyens de pompage (20; 110) fournissent de l'énergie à 1,54 $\mu$m, et dans lequel l'effet laser se produit entre les niveaux d'énergie $^4I_{11/2}$ et $^4I_{13/2}$.

**6.** L'ensemble laser de la revendication 5 dans lequel le cristal de fluorure de calcium contient 5 pour cent d'ions d'erbium en pourcentage moléculaire.

**7.** L'ensemble laser de la revendication 1 dans lequel le premier état d'énergie est l'état final d'effet laser de la transition laser pour le milieu laser (52; 102), et la concentration du matériau de conversion incrémentielle est telle que l'échange d'énergie entre les électrons du premier état est suffisant pour maintenir l'inversion de population entre le second et le premier états d'effet laser, ce qui permet de maintenir un fonctionnement laser continu en réponse à l'excitation continue par les moyens de pompage (20; 110).

**8.** L'ensemble laser de la revendication 1 dans lequel la cavité laser (54, 56; 104, 106) comprend un chemin à effet laser, et le milieu laser (52; 102) est placé le long de ce chemin à effet laser, caractérisé en ce qu'il comprend de plus
- une lame (108) placée transversalement à ce chemin à effet laser; et
- des moyens de commutation (114, 116, 122, 120, 118) pour appliquer sélectivement une énergie suffisante à la lame (108) de façon à en vaporiser une partie sur le chemin à effet laser, ce qui déclenche l'effet laser dans la cavité (54, 56; 104, 106).

**9.** L'ensemble laser de la revendication 8 dans lequel la lame (108) est en graphite.

**10.** L'ensemble laser de la revendication 8 dans lequel les moyens de commutation (114, 116, 122, 120, 118) comprennent un laser à commutation Q (118).

EP 0 267 942 B1

**Patentansprüche**

1. Laseranordnung (50; 100) mit:

   einem Laserresonator (54, 56; 104, 106);

   einem Lasermedium (52; 102), das lasende Ionen enthält, die innerhalb des Resonators (54, 56; 104, 106) angeordnet sind, sowie ein "up-konvertierendes" Material, welches den Austausch von Energie zwischen Elektronen der lasenden Ionen bei einem ersten Energiezustand unterhalb eines zweiten metastabilen Anfangszustandes derart erlaubt, daß einige der austauschenden Elektronen zu dritten Energiezuständen bei dem zweiten Energiezustand oder oberhalb des zweiten Energiezustandes "up-konvertiert" werden;

   einer Pumpvorrichtung (20; 110), um selektiv Anregungsenergie für das Lasermedium (52; 102) bereitzustellen, dadurch gekennzeichnet, daß

   die Pumpvorrichtung (20; 110) selektiv nur Pumpenergie bereitstellt, welche a) von geeigneter Wellenlänge ist, um Elektronen von Energiezuständen unterhalb des ersten Energiezustands zu dem ersten Energiezustand zu befördern, und b) eine Intensität aufweist, welche geeignet ist, um Elektronen von Energiezuständen unterhalb des ersten Energiezustands zu dem ersten Energiezustand in ausreichender Anzahl zu befördern, um eine wesentliche "Up-Konversion" und das daraus resultierende Lasen zu unterstützen; und

   die Pumpvorrichtung (20; 110) und die sich ergebende "Up-Konversion" als die einzige Vorrichtung dient, um das Lasermedium (52; 102) zu pumpen.

2. Laseranordnung nach Anspruch 1, worin das "up-konvertierende" Material Erbiumionen enthält.

3. Laseranordnung nach Anspruch 1, worin das Lasermedium einen Kalziumfluoridkristall enthält, der Erbiumionen beherbergt.

4. Laseranordnung nach Anspruch 3, worin der Kalziumfluoridkristall 5 Molprozent von Erbiumionen enthält.

5. Laseranordnung nach Anspruch 3, worin die Pumpvorrichtung (20; 110) Energie bei 1,54 $\mu$m bereitstellt und das Lasen zwischen den $^4I_{11/2}$ und $^4I_{13/2}$ Energiezuständen auftritt.

6. Laseranordnung nach Anspruch 5, worin der Kalziumfluoridkristall 5 Molprozent von Erbiumionen enthält.

7. Laseranordnung nach Anspruch 1, worin der erste Energiezustand der Laserendzustand des Laserübergangs für das Lasermedium (52; 102) ist und die Konzentration von "up-konvertierendem" Material derartig ist, daß der Austausch von Energie zwischen Elektronen bei dem ersten Zustand ausreichend ist, um eine Besetzungsinversion zwischen dem zweiten und dem ersten Laserzustand aufrechzuerhalten, wobei ein kontinuierlicher Laserbetrieb in Antwort auf kontinuierliche Anregung mittels der Pumpvorrichtung (20; 110) aufrechterhalten werden kann.

8. Laseranordnung nach Anspruch 1, worin der Laserresonator (54, 56; 104, 106) einen Laserpfad enthält und das Lasermedium (52; 102) entlang des Laserpfades angeordnet ist, dadurch gekennzeichnet, daß es weiter enthält

   eine Folie (108), welche über dem Laserpfad angeordnet ist; und

   eine Schaltervorrichtung (114, 116, 122, 120, 118), um selektiv ausreichende Energie an die Folie (108) anzulegen, um einen Teil von ihr auf dem Laserpfad zu verdampfen, wobei Lasen des Resonators (54, 56; 104, 106) auftritt.

9. Laseranordnung nach Anspruch 8, worin die Folie (108) eine Graphitfolie ist.

10

**10.** Laseranordnung nach Anspruch 8, worin die Schaltervorrichtung (114, 116, 122, 120, 118) einen Q-geschalteten Laser (118) enthält.

Fig. 1.

EP 0 267 942 B1

F i g. 2.

Fig. 3.

Fig. 4.

Fig. 5.

Fig. 6.

Fig. 7.

WAVELENGTHS IN MICROMETERS

Fig. 8.

WAVELENGTHS IN MICROMETERS

Fig. 9.

TIME (2m SEC/DIVISION)

18

# Fig. 10.

# Fig. 11.

Fig. 12.

Fig. 14.

# Fig. 13.

EP 0 267 942 B1

Fig. 15.

POWER 120

TRIGGER 122

TRIGGER DELAY 116

118

LENS

Q-SWITCHED
Nd:YAG

124

InAs
DET

GRAPHITE
FOIL

102    Er LASER

100

126    104    108

PUMP SOURCE 110

106

114

TRIGGER

POWER 112